# EUROPEAN PATENT APPLICATION

(11) **EP 0 770 765 A1**
(43) Date of publication of application: **02.05.1997**
(21) Application number: 95116781.6
(22) Date of filing: 24.10.1995
(51) Int. Cl.: F01L 3/06, F01L 3/02, B23P 15/00

(54) **Poppet valve and method of manufacturing the same**

(71) Applicant: FUJI OOZX INC., Fujisawa-shi, Kanagawa-ken (JP)
(72) Inventor: Kenmoku, Takeji, c/o Fuji Oozx Inc., Fujisawa-shi, Kanagawa-ken (JP); Hamada, Akihiro, c/o Fuji Oozx Inc., Fujisawa-shi, Kanagawa-ken (JP); Umino, Shinichi, c/o Fuji Oozx Inc., Fujisawa-shi, Kanagawa-ken (JP)
(74) Representative: Abitz, Walter, Dr.-Ing.

(57) **Abstract**

A valve stem (2) and a valve head (1) are separately formed, and the ends of the valve stem (2) and head (1) are joined by friction welding to form a valve element of a poppet valve (1). During welding, a burr (8) is transversely formed at the joined portion to form a receiving plate for preventing oil-down.

## Description

The present invention relates to a poppet valve and a method of manufacturing the same, and in particular, to a poppet valve having a receiving plate for preventing oil-down to a valve head, at the lower end of a valve stem.

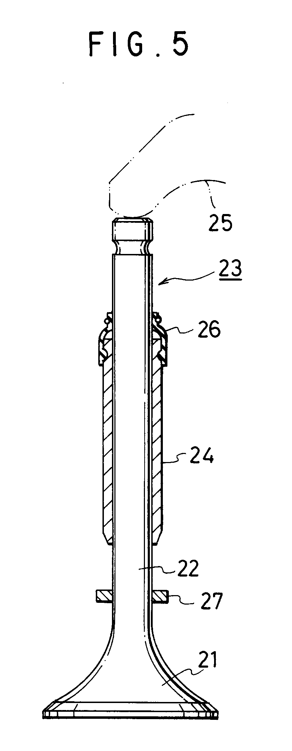

As shown in Fig. 5, a poppet valve comprises a valve element 23 which comprises a valve head 21 and a valve stem 22. The valve is inserted slidably through a valve guide 24 which is in a press fit with a cylinder head (not shown), and is driven by pushing a rocker arm 25 or a tappet at the end.

During operation of an engine, the valve stem 22 is reciprocated at high speed in the valve guide, so that wear or seizure is likely to occur at the contacting surface between the valve stem 22 and the valve guide 24. To prevent it, lubricating oil is introduced through a gap between the valve stem 22 and the valve guide 24, thereby lubricating the sliding surface.

However, excessive lubricating oil is introduced through the gap between the valve stem 22 and the valve guide 24, so that oil is leaked towards the valve head 21, called "oil-down". Thus, there are disadvantages of increased consumption rate of the lubricating oil and carbonized accumulation on the surface of the valve head 21, so that the introduction of the lubricating oil may be prevented by securing a lip seal 26 at the upper end of the valve guide 24.

The lip seal 26 is deteriorated by operation of the engine for a long time, so that initial sealing capability may be gradually damaged. Accordingly, introduction of the lubricating oil is increased and flowed out towards the valve head 21, on which it is carbonized and accumulated, so that the valve head 21 is burnt and gas is leaked, thereby decreasing engine performance.

To prevent such disadvantages, in a conventional poppet valve, an annular receiving plate 27 is fixed at the lower end of the valve stem 22 in a port of the cylinder head by shrink-fit or welding, so that lubricating oil which leaks out of a gap between the valve stem 22 and the valve guide 24 is prevented from flowing to the high temperature valve head 21 directly.

When the receiving plate 27 is fixed to the valve stem 22 by shrink-fit, it is necessary to increase accuracy of an opening of the receiving plate 27 by mechanical processing, and the receiving plate 27 gets out of the fixed position by difference in coefficient of thermal expansion. When the receiving plate 27 is fixed to the valve stem 22 by welding, strain is caused by welding heat to generate bending of the valve stem 22, and the receiving plate 27 is liable to peel off the welded portion by vibration during operation. Both of the fixing means increases the number of the steps for securing the receiving plate and increases the cost for manufacturing.

### SUMMARY OF THE INVENTION

To solve the foregoing disadvantages, according to the present invention, there is provided a poppet valve and a method of manufacturing the same, a receiving plate being easily provided at low cost to prevent movement and peeling-off without fixing means such as shrink-off or welding.

According to one aspect of the present invention, there is provided a poppet valve which comprises a valve head and a valve stem, a circumferentially projected receiving plate being integrally formed with the poppet valve between the valve head and the valve stem to prevent oil-down.

According to another aspect of the present invention, there is provided a method of manufacturing a poppet valve, the method comprising the steps of forming a valve head and a valve stem separately; and joining the ends of the valve head and the valve stem by friction welding to form the poppet valve, a burr being formed to project transversely during welding to form a receiving plate for receiving oil.

In the poppet valve, the receiving plate is integrally formed with the valve element to prevent the receiving plate from moving axially. The receiving plate is easily formed at low cost without conventional fixing means such as shrink-fit or welding.

### BRIEF DESCRIPTION OF THE DRAWINGS

The features and advantages of the present invention will become more apparent from the following description with respect to drawings wherein:
Fig. 1 is a partially cut-away front view of one embodiment of a poppet valve according to the present invention;
Fig. 2 illustrates a method of manufacturing the poppet valve, (A) being a top plan view in which a valve head and a valve stem separately formed are chucked by a friction welding machine, respectively, (B) being a partially cut-away top plan view which shows the completion of friction welding;
Fig. 3 is an enlarged top plan view of a variation of a joined portion between the valve head and stem;
Fig. 4 is an enlarged top plan view of another variation of the same; and
Fig. 5 is a front elevational view of a conventional poppet valve.

### DETAILED DESCRIPTION OF PREFERRED EMBODIMENTS

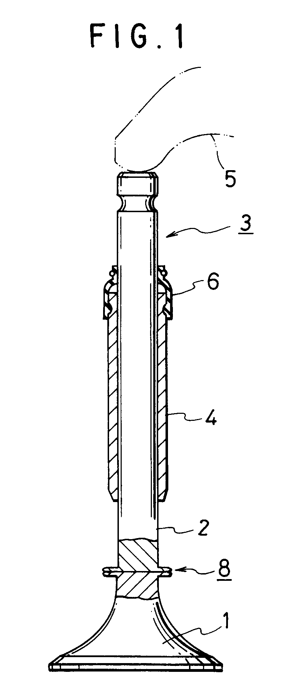

Fig. 1 illustrates a poppet valve according to the present invention, in which a valve element 3 comprises a valve head 1 made of Ni-Cr heat-resisting super alloy such as Inconel 751 or Orstenite heat-resisting steel such as SUH 36, and a valve stem 2 made of martensite heat-resisting steel such as SUH 3, the upper end of the valve head 1 being joined with the lower end of the valve stem 2 which has the same diameter as that of the valve head.

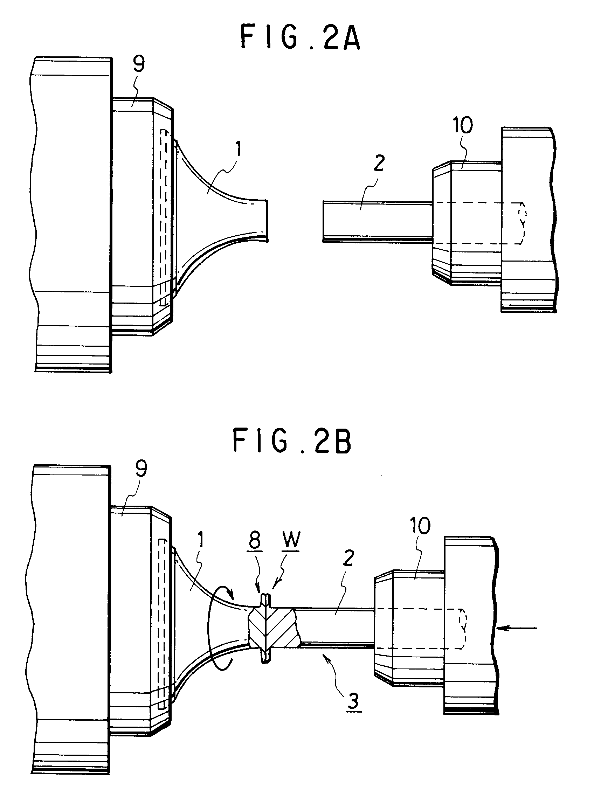

Fig. 2 illustrates the steps for manufacturing the poppet valve, in which, as shown in (A), the surface of the valve head 1 formed by prior forging step is grasped by a rotary chuck 9 of a frictional welding machine, while the valve stem 2 made of a rounded rod is grasped by an opposing fixing chuck 10 coaxial with the chuck 9. As shown in (B), the chuck 9 is rotated to lead high speed rotation of the valve head 1. At the same time, the fixing chuck 10 is moved towards the chuck 9, and the end face of the valve stem 2 is contacted with the end face of the valve head 1. The contacting surface comes to high temperature by friction heat, and the valve stem 2 is pressed when the ends are melted, so that the ends of the valve head 1 and the valve stem 2 are strongly joined, and an annular welding burr (W) is formed at the joined portion by melting under pressure.

Finally, heat treatment or mechanical processing is carried out to the joined valve element, and the parts except the welding burr (W) are finished to a certain size to form a poppet valve having the welding burr (W) which forms a receiving plate 8 at the joined portion, as shown in Fig. 1.

As described above, in the poppet valve, the receiving plate 8 for preventing oil-down is formed at the same time as connection between the valve head 1 and the valve stem 2 when the poppet valve is manufactured, and integrally formed with the head 1 and stem 2, so that it is unnecessary to employ troublesome fixing means such as shrink-fit and fixing means. Even after joining, the receiving plate is neither slipped nor peeled, and the valve stem 2 is not bent by heat strain.

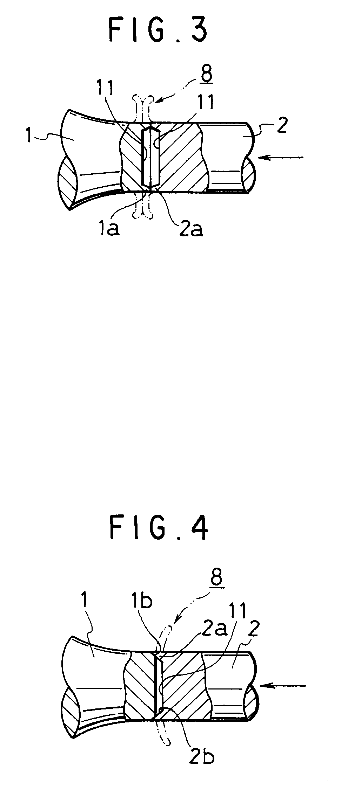

As shown in Figs. 3 and 4, variations will be described with respect to the form of the joined portion between the valve head 1 and the valve stem 2.

In Fig. 3, there is formed a circular recess 11 which expands towards an opening at each end of the valve head 1 and the valve stem 2 respectively, and circumferential projections 1a and 2a are contacted to each other to make friction welding. As shown by two-dotted lines, circumferential projections 1a and 2a are forced out to increase a welding burr which forms a receiving plate, thereby receiving lubricating oil leaked by oil-down, effectively.

In Fig. 4, a recess 11 similar to the above is formed at the valve stem 2, while on the outer circumference of the valve head 1, a chamfered portions 1b are formed to have roughly the same angle as that of a tapered surface 2b of the circumferential projection 2a. The tapered surface 2b is contacted with the chamferred portion 1b to make frictional welding. As shown by two dotted lines, at the beginning of welding, the circumferential projection 2a is pressed and forced out by the end of the valve head 1, and a receiving plate 8 (welded burr) thus formed is curved upwards of the valve stem 2 or rightwards in Fig. 4, thereby improving gathering capability of lubricating oil owing to oil-down and decreasing the amount of lubricating oil which is overflowed to the valve head 1.

The present invention is applied to a hollow valve (including metal sodium enclosing valve) in addition to the foregoing intake poppet valve in which the valve element 3 comprises the valve head 1 and the valve stem 2 made of different material respectively.

The foregoings merely relate to preferred embodiments of the present invention. Various changes and modifications may be made by person skilled in the art without departing from the scope of claims wherein:

## Claims

1. A poppet valve which comprises a valve head and a valve stem, a circumferentially projected receiving plate being integrally formed with the poppet valve between the valve head and the valve stem to receive oil.

2. A method of manufacturing a poppet valve, the method comprising the steps of:
forming a valve head and a valve stem separately; and
joining ends of the valve head and the valve stem by friction welding to form the poppet valve, a burr being formed to project transversely during welding to form a receiving plate for receiving oil.

3. A method as defined in claim 2 wherein there are formed circular recesses which expand toward opening side on ends of the valve stem and the valve head, which are joined by friction welding.

4. A method as defined in claim 2 wherein there is formed a circular recess which expands toward opening side on an end of the valve stem, a chamferred portion being formed at a circumference of an end face of the valve head to contact an inner surface of the recess of the valve stem.
